# EUROPEAN PATENT SPECIFICATION

(11) **EP 0 497 747 B1**
(45) Date of publication and mention of the grant of the patent: **20.09.1995**
(21) Application number: 92830039.1
(22) Date of filing: 30.01.1992
(51) Int. Cl.: G01J 3/50, B07C 5/342

(54) **An electronic device for colour shade or colour difference detecting**
Elektronische Vorrichtung zum Nachweis eines Farbtons oder Farbunterschieden
Dispositif électronique pour la détection de nuances de couleur ou de différences de couleur

(30) Priority: 31.01.1991 IT BO910026
(43) Date of publication of application: 05.08.1992
(73) Proprietor: SIB SIBER S.r.l., I-40050 Monte San Pietro (Bologna) (IT)
(72) Inventor: Monari, Marco, I-40134 Bologna (IT)
(74) Representative: Lanzoni, Luciano

(56) References cited:
- EP-A- 0 300 545
- EP-A- 0 375 881
- WO-A-89/04468
- GB-A- 2 013 875
- US-A- 3 563 378
- US-A- 4 103 177
- US-A- 4 249 081
- US-A- 4 952 062

## Description

The invention relates to an electronic device for colour shade or difference detecting, with regard to the surfaces of objects or products, in particular objects or products which move relative to the said device, for example along an advancement direction and in particular on a production line.

During the productive cycle of coloured articles or products which have to be utilised one next to the other, a colour detecting phase is performed on the articles themselves for their sub-division on the basis of their different colour shades. This colour-differentiating has the aim of avoiding the placing of articles with matt shades next to glossy shades, as, for example, in the case of ceramic tiles.

Leaving aside methods which leave such differentiation to the subjective and empirical decisions of operators, the prior art teaches a device equipped with two colour sensors able to operate on the object to be examined and respectively on a sample object which presents the correct color shades. The two sensors move synchronistically with respect to the relative objects and examine points or corresponding areas of the said objects.

The device has shown itself to have, however, a serious drawback consisting in the fact that it considers two objects to be different even when they are chromatically identical but are oriented differently on the advancement line; that is, for example, if one of the objects is rotated at 90° to another.

EP-A-0 300 545 discloses an apparatus for sorting magazines. The apparatus comprises pairs of detectors and emitters arranged in lines, which detect the grey values of the object at different positions. US-A-3 563 378 discloses an apparatus for controlling and sorting of panels in which the reflected light is taken as a measure of the colour shade.

The aim of the present invention as defined in claim 1 is to provide a device capable of detecting the color shades or differences of objects or products in general, irrespective of their positioning on the respective transport plane, or on a feeding line of the said objects towards successive sorting stations which stations function on the basis of colour shade differentiation.

The characteristics and advantages of the device will better emerge from the detailed description that follows, made with reference to the accompanying drawings which represent a preferred but not exclusive embodiment, here included purely in the form of an example, in which:
- Figure 1 shows a block design of the electronic device according to the present invention;
- Figure 2 shows, schematically and in plan view with some parts removed better to evidence others, the electronic device of the present invention in one of its operative phases of color shade detecting of an object represented as a tile.

With reference to the figures, the electronic device according to the present invention comprises an opto-electronic device 1 connected both at its input and at its output to a supply, detecting and processing block 8. Downstream of the supply, detecting and processing block 8, in order and connected in order, are the following: a discriminator block 10, a memorising block 11, a comparison block 12 and an activating block 13. The invention also comprises detecting means 17 for the presence of objects, as will become clearer during the course of this description.

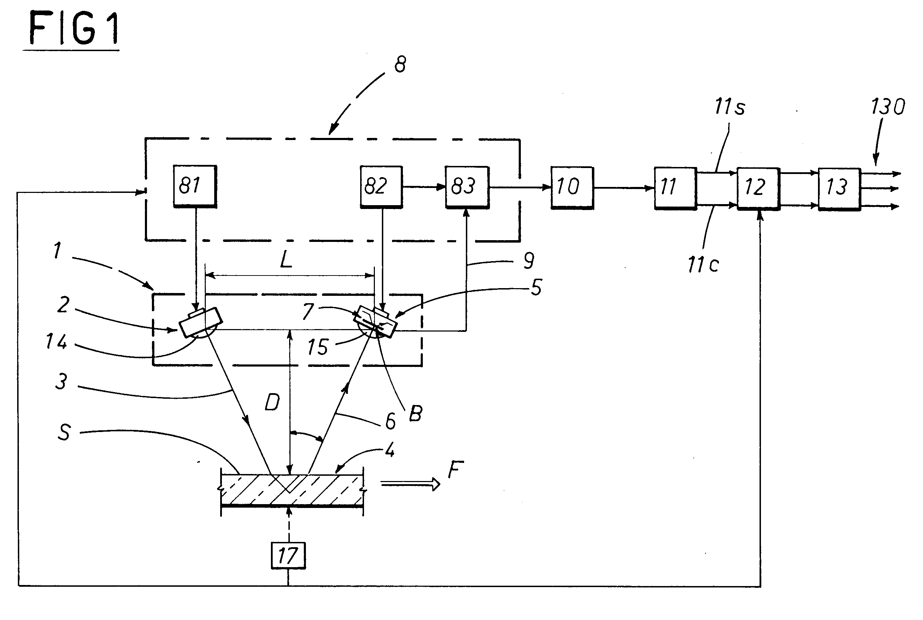

Observing the opto-electronic block 1, it can be noted that it comprises a plurality of electronic senders 2 and the same number of electronic receivers 5 placed at a distance D from the surface S of each object 4 to be examined. The electronic senders 2 and the electronic receivers 5 are sensitive to the same frequency, for example in the infra-red field, and are arranged in such a way that the luminous beam 3 emitted by an electronic sender 2 is deviated by the surface S and received by the respective electronic receiver 5 as evidenced in figure 1. From figure 1 it can also be seen that each sender 2 and the respective receiver 5 are arranged at a reciprocal distance L and are inclined at an identical angle a with respect to a plane perpendicular to the surface S.

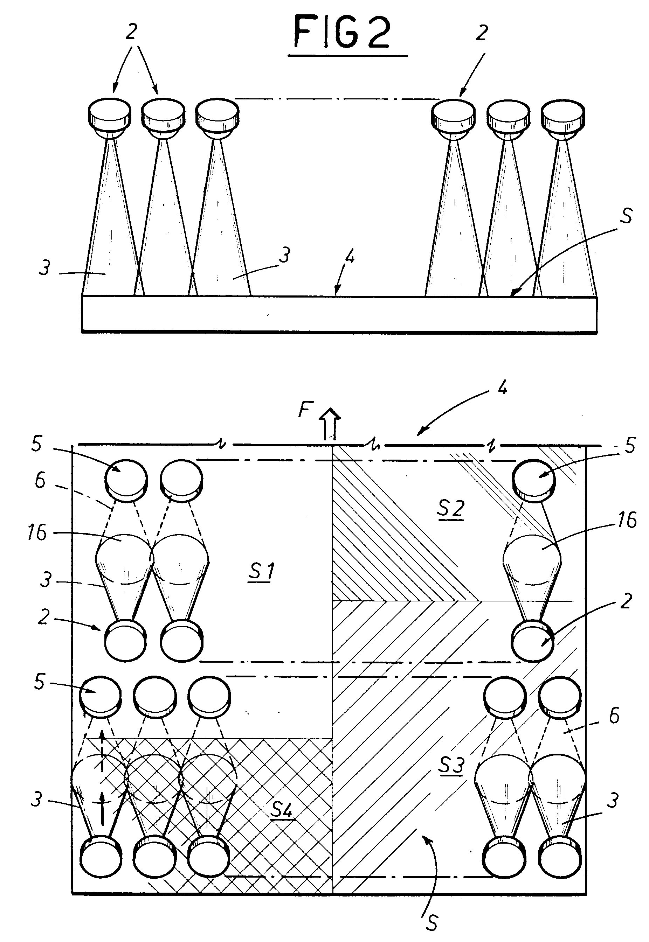

The senders 2 and the receivers 5 are arranged on at least one line transversally to the advancement direction of the objects or products 4 indicated by F in figure 1. More exactly, each sender 2 and its respective receiver 5 are arranged along a parallel direction to direction F (see figure 2), while the senders 2 and the respective receivers 5 are arranged on two lines which are transversal to the said direction F. The distance between two contiguous senders 2 or receivers 5 is such that the surface area S struck by the luminous beams 3 emitted by the senders 2 is superimposed at least partially with the aim of covering the entire transversal dimension of the surface S of the object or product 4 (see figure 2).

In order better to cover the entire surface S of each object 4, the sender-receiver couples 2 and 5 are arranged in two lines transversal to the advancement direction F and each sender-receiver couple 2 and 5 belonging to one line is staggered with respect to the couples in the other lines (see figure 2).

Comparing figures 1 and 2, it can be noted that each electronic sender 2 and each electronic receiver 5 is equipped with a respective diverging lens 14 and a respective converging lens 15. In this way the luminous beam 3 of each sender 2 covers an area 16 of considerable width of the surface S (see especially figure 2).

The electronic receivers 5 are each constituted by a phototransistor 7 with open base as schematically represented in figure 1, and the respective converging lens 15 is arranged in such a way as to converge the luminous beam 6 on the base B of the phototransistor 7, the said luminous beam 6 having been deviated by the surface S.

In more detail, figure 1 shows that each electronic sender 2 is supplied by a block 81 being a part of the supply, detecting and processing block 8 and each electronic receiver 5 is supplied by a block 82 being also a part of the said supply, detecting and processing block 8. The block 81 supplies the electronic senders 2 discontinuously and with such a frequency that the luminous beams 3 cover areas 16 of the surface S which are slightly superimposed among themselves also in the advancement direction F with the aim of covering the entire longitudinal dimension of the surface S of the object 4. The block 82, on the other hand, continuously supplies the electronic receivers 5 which are connected, at their outputs, to a receiver-processor block 83 being also a part of the block 8. The block 83 is connected, at its input, also to the block 82 and, at its output, to the discriminator block 10 (see figure 1).

Blocks 8 and 12 are commanded by the presence-detecting means 17 which activate and deactivate the blocks 8 and 12 in accordance with the presence or non-presence of an object or product 4 in their field.

With particular reference to figure 1, the functioning of the electronic device according to the invention is the following.

During advancement of the object 4 along direction F, the senders 2 emit luminous beams 3 which strike areas 16 of the surface S and which are deviated towards the base B of the phototransistors 7 (see figure 1 where the beam 3 deviated by the surface S is denoted by 6). The luminous beam is deviated in that it is deflected both by reflection and by refraction, as indicated in figure 1: dimensions D and L and angle a have not been specified since they depend on the material of the object 4 and they can only be said to be such as to permit, with respect to the material constituting the object 4, the best sensitivity and the best repeatablity to the optoelectronic block 8. The repeatability of the readings is fundamental to avoid any one object's 4 giving different results so as to be discarded or accepted according to results.

Returning to the functioning of the electronic device, the luminous beam 6 induces on each phototransistor 7 a variation of the current which crosses it. The blocks 81 and 82 supply the electronic senders 2 and respectively the electronic receivers 5 with a current having lower than the nominal value, that is with a lower value than that advised by the makers of the said electronic organs. This has been envisaged since the current variations induced by the luminous beams 6 on the passage current of the phototransistors 7 is very low and, if the passage current value is low and dimensionally comparable with its variation, the said variation is more easily and precisely estimable. For example, the supply current of the electronic senders is about 10-20 times lower than that advised by the makers, while the supply current of the electronic receivers 5 is about 200 times lower than that advised by the makers. The phototransistors 7 emit thus a signal 9 and send it to the detecting and processing block 83 which cleans up the said signals 9 received from the phototransistors 7 and passes on to the successive discriminator block 10 only those signals 9 whose frequency is the same as or nearly the same as that to which the electronic senders 2 and the electronic receivers 5 are sensitive. The reader-processor block 83 is necessary because the phototransistors 7, although precise, also read frequency signals which are not exactly those to which they are sensible, and these signals have a very low value and invalidate the final result, as will be explained more fully below. In particular, also as will be better explained hereafter, the emission frequency of the feeding current of the electronic senders 2 is of a higher value with respect to the nominal feeding frequency of usual electric current sources. Thus there is the advantage that the electronic readers 5 can function correctly even in the presence of external light without being minimally disturbed by the aforementioned frequencies. The discriminator block 10 receives the stabilised or purified signals 9 coming from all the phototransistors 7 for each scansion of the object 4, that is for each activation of the electronic senders 2, elaborates them and memorises in the successive block 11 at least two values for each scansion, being the two electric signals corresponding to the lightest and darkest chromatic values, without superimposing them on the electric signals which have already been memorised.

As soon as the scansion of an entire surface S has been concluded, an event determined by the detecting means 17, the comparison block 12 reads from the memory block 11 the two electric signals 11s and 11c corresponding to the darkest and lightest values among all those it has memorised relative to the single phases of transversal scansion. The block 12 thus makes a comparison between these electric signals 11s and 11c and electric signals corresponding to predetermined sample chromatic values, and sends a corresponding signal to the activating block 13. The sample chromatic values are at least two, corresponding to the lightest and darkest chromatic values defining an interval of values between which the chromatic values read by the block 12 must be. If the chromatic values of the block 11 are comprised between the sample values, the comparison block 12 signals to the activating block 13 the validity of the object 4 and this latter block 13 provides a corresponding electromechanical signal, for example the transferring of the object 4 to a successive packing station. In the case that one or both of the values of the block 11 are larger or smaller than the sample chromatic values, the comparison block 12 will provide a different signal to the activating block 13, which block 13 will, for example, transfer the examined object 4 to a further electronic colour shade detecting device. In the case that the chromatic values of the block 11 are one higher and one lower than the sample chromatic values, the examined object 4 will be ejected, that is, the signal sent by the comparison block 12 to the activating block 13 is such that the said activating block 13 commands the ejection of the examined object 4. For the sample chromatic values two different values may be used from those already established, one higher and one lower, which envisage the ejection of an examined object 4 if it does not fall within the range thus established. If a surface S has a chromatic value which is lighter than the minimum light chromatic value acceptable, it means that the object 4 has at least an undesired light-coloured mark due to the absence of the correct colour. If, on the other hand, a surface S has a dark chromatic value which is darker than the minimum dark value admitted, this means that the examined object 4 is broken: that is because in a certain area of the surface S the luminous beam 3 emitted by the electronic senders 2 is not deviated by the surface S itself towards the respective electronic senders 5 which do not read, therefore, any signal 6 at all.

Thus the object 4 may be arranged according to any arrangement on its supporting plane since only the lightest and darkest chromatic values are read. From figure 2, where by way of example a tile with non-uniform colouring is illustrated, indicated by the four areas with different shades S1, S2, S3, S4, all being part of the object 4, it can be understood that even on rotating the said tile 4 on its support plane the scansion result is not changed.

The advantages of the electronic device are innumerable, in particular its precision and repeatability with regard to results, which render it extremely valuable.

It can be used advantageously to check not only the colour shades of the objects 4, but also for checking the said objects' 4 conditions, a very important operation, but one which when the objects 4 are numerous and small, as for example in the field of ceramic tiles, becomes time-wasting and costly.

## Claims

1. An electronic device for detecting colour shades or differences on the surfaces of objects or products in movement along an advancement direction, in particular in the field of production lines, comprising:
- an optoelectronic block (1) constituted by a plurality of electronic senders (2) emitting radiation (3) onto the surface (S) to be examined of the objects or products (4) in question, and corresponding electronic receivers (5) of said radiation after it has been (6) deviated and reflected by the said surfaces (S), said electronic senders (2) and receivers (5) being sensitised to the same frequency and arranged on at least one line transversally to the advancement direction (F) of the said objects or products (4) so as to cover, with the radiation (3) emitted by the said electronic senders (2), at least the whole of the transversal dimension of the surfaces (S) to be examined of the said objects or products (4); the said electronic receivers (2) being constituted by open-base (B) phototransistors (7) on which the said reflected radiation (6) is focussed by focussing means (15);
- an electric supply block (8) for the said optoelectronic block (1); the said electronic senders (2) and the said electronic receivers (5) being supplied with a current of much lower value with respect to the envisaged nominal current values in such a way as to improve the sensitivity to the said reflected radiation (6) in the sense of rendering more differentially or percentagely modifiable the passage of current through the said phototransistor (7) on the part of the variation of the same passage current induced on the said phototransistor (7) by the said reflected radiation (6);
- a discriminator block (10) connected at its input to the output of the said supply block (8), which discriminator block (10) is able to select, from the electronic signals received from the said supply block (8) during the single transversal scansion of the entire surface (S) on the part of the said electronic senders (2) and receivers (5), at least the electric signals corresponding to the chromatic values which are darkest and respectively lightest presented by the said surface (S) of the said object (4) during the same single scansion phase, and able to memorise the electric signals corresponding to the said chromatic values in a successive memory block (11) without superimposing them on the electric signals already memorised in the said memory block (11);
- a comparison block (12), with its input connected to the output of the said memory block (11) and capable of detecting from the said memory block (11) the two electric signals corresponding to the lightest and darkest chromatic values respectively, among all the values it has internally memorised with respect to the single transversal scansion phases, and able also to compare the two said electric signals with electric signals corresponding to pre-established sample chromatic values; able to output, for each said object (4), a signal depending on the said comparison and indicating if the said two electric signals detected by the said memorising block (11) are comprised or not in the interval of values defined by the electric signals corresponding to the said sample chromatic values;
- an activating block (13) connected at its input to the output of the said comparison block (12) and able to provide one or more electromechanical signals corresponding to the signal received from the said comparison block (12);
- detecting means (17) detecting the presence of the said object (4), connected at their output to the said supply block (8) and to the said comparison block (12) and able to activate and de-activate the supply block (8) and the comparison block (12) according to the operative phases of detection and comparison.

2. A device as in claim 1, wherein the said supply and processing block (8) comprises an oscillator-feeder block (81) able to feed the said electronic senders (2) with a periodic wave-form positive-impulse current which frequency is higher than the nominal supply frequency coming from a normal electric current source.

3. A device as in claim 1, wherein the said supply block (8) comprises a further supply block (82) connected at its output to the input of the said electronic receivers (5) and able to supply the said electronic receivers (5) in a uniform and constant way.

4. A device as in claim 1, wherein the said supply block (8) further comprises a stabilizing block (83) connected at its input to the output of the said electronic receivers (5), said stabilizing block (83) being able to stabilise signals (9) coming from the said electronic receivers (5) and being connected at its output to the input of the said discriminator block (10).

5. A device as in claim 1, wherein the said electronic senders (2) and the said electronic receivers (5) are reciprocally distanced in such a way that the area of said surface (S) of said object (4) to be measured irradiated by any of said senders (2) is partially superimposed on the area irradiated by an adjacent sender.

6. A device as in claim 1, wherein the said electronic senders (2) and the respective electronic receivers (5) are arranged in at least two lines arranged transversally to the supply line and are staggered among themselves with respect to a longitudinal direction in such a way that the said radiation (3) emitted by the electronic senders (2) arranged in one of the transversal lines cover areas not covered by the radiation (3) emitted by the electronic senders (2) arranged in a contiguous transversal line.

7. A device as in claim 1, wherein the said electronic senders (2) are fed by currents having ten-to-twenty times lower values with respect to those of nominal current; and the said electronic receivers (5) are supplied with currents of value lower by about two hundred times with respect to envisaged values of nominal current.

## Patentansprüche

1. Elektronische Vorrichtung zum Nachweis eines Farbtons oder Farbunterschieden auf den Oberflächen von Gegenständen oder Produkten in Bewegung entlang einer Vorschubrichtung, insbesondere im Bereich von Produktionsanlagen, enthaltend:
- einen optoelektronischen Block (1), bestehend aus einer Anzahl von elektronischen Sendern (2), welche eine Abstrahlung (3) auf die zu untersuchende Oberfläche (S) der Gegenstände oder Produkte (4) abgeben, und entsprechenden elektronischen Empfängern (5) der genannten Abstrahlung, nachdem diese durch die genannten Oberflächen (S) abgeleitet und reflektiert wurde, wobei die genannten elektronischen Sender (2) und Empfänger (5) auf der gleichen Frequenz sensibilisiert und auf wenigstens einer quer zu der Vorschubrichtung (F) der genannten Gegenstände oder Produkte (4) verlaufenden Reihe angeordnet sind, so dass sie mit der von den genannten elektronischen Sendern (2) ausgesandten Abstrahlung (3) wenigstens die gesamte Querabmessung der zu prüfenden Oberflächen (S) der genannten Gegenstände oder Produkte (4) abdecken; wobei die genannten elektronischen Empfänger (5) auf Phototransistoren (7) mit offenem Boden (B) bestehen, auf welchem die genannte reflektierte Abstrahlung (6) mit Hilfe von Fokussiermitteln (15) fokussiert werden;
- einen elektrischen Speisungsblock (8) für den genannten opto-elektronischen Block (1); wobei die genannten elektronischen Sender (2) und die genannten elektronischen Empfänger (5) im Verhältnis zu den vorgesehenen normalen Stromwerten mit einem Strom von einem sehr viel niedrigeren Wert gespeist werden, und zwar auf solche Weise, dass die Empfindlichkeit der genannten reflektierten Abstrahlung (6) in dem Sinne verbessert wird, dass der Durchlauf des Stromes durch die genannten Phototransistoren (7) aufgrund der Variierung des von der genannten reflektierten Abstrahlung (6) in die genannten Phototransistoren (7) induzierten Stromdurchlaufs selbst unterschiedlicher oder prozentual veränderbarer gemacht wird;
- einen Diskriminatorblock (10), der mit seinem Eingang an den Ausgang des genannten Speisungsblockes (B) angeschlossen und in der Lage ist, aus den von dem genannten Speisungsblock (8) während der einzelnen, querverlaufenden Abtastung der gesamten Oberfläche (S) durch die genannten elektronischen Sender (2) und der Empfänger (5) empfangenen elektronischen Signalen wenigstens die elektrischen Signale auszuwählen, die den chromatischen Werten entsprechen, welche jeweils die dunkelsten und die hellsten auf der genannten Oberfläche (S) des genannten Gegenstandes (4) während der einzelnen Abtastphase selbst vorhandenen sind, sowie in der Lage, die den genannten chromatischen Werten entsprechenden elektrischen Signale in einem anschliessenden Speicherblock (11) zu speichern, ohne sie den bereits in dem genannten Speicherblock (11) gespeicherten elektrischen Signalen zu überlagern;
- einen Vergleichsblock (12), der mit seinem Eingang an den Ausgang des genannten Speicherblocks (11) angeschlossen und in der Lage ist, aus dem genannten Speicherblock (11) die beiden elektrischen Signale zu erfassen, die jeweils dem hellsten und dem dunkelsten chromatischen Wert entsprechen, und zwar aus allen Werten, die im Inneren im Verhältnis zu den einzelnen querverlaufenden Abtastphasen gespeichert wurden, sowie ebenfalls in der Lage, die beiden genannten elektrischen Signale mit elektrischen Signalen zu vergleichen, die vorher eingestellten chromatischen Musterwerten entsprechen, und in der Lage, für jeden genannten Gegenstand (4) ein von dem genannten Vergleich abhängiges Signal auszusenden, welches anzeigt, ob die beiden genannten Signale, die von dem genannten Speicherblock (11) erfasst worden sind, in einem Wertebereich enthalten sind oder nicht, welcher durch die elektrischen Signale definiert ist, die den genannten chromatischen Musterwerten entsprechen;
- einen Aktivierblock (13), angeschlossen mit seinem Eingang an den Ausgang des genannten Vergleichsblockes (12) und in der Lage, ein oder mehrere elektromechanische Signale zu liefern, die dem von dem genannten Vergleichsblock (12) empfangenen Signal entsprechen;
- Abtastmittel (17), die das Vorhandensein des genannten Gegenstandes (4) abtasten, angeschlossen mit ihrem Ausgang an den genannten Speisungsblock (8) und an den genannten Vergleichsblock (12) und in der Lage, in Übereinstimmung mit den Betriebsphasen von Abtasten und Vergleich den Speisungsblock (8) und den Vergleichsblock (12) zu aktivieren und zu entaktivieren.

2. Vorrichtung nach Patentanspruch 1, **dadurch gekennzeichnet**, dass der genannte Speisungs- und Prozessblock (8) einen Oszillator-Speisungs-Block (81) enthält, in der Lage, die genannten elektronischen Sender (2) mit einem periodischen wellenförmigen Positivimpulsstrom zu versorgen, dessen Frequenz höher ist als die Nennspeisefrequenz, die aus einer normalen elektrischen Stromquelle herkommt.

3. Vorrichtung nach Patentanspruch 1, **dadurch gekennzeichnet**, dass der genannte Speisungsblock (8) weiterhin einen Speisungsblock (82) enthält, der mit seinem Ausgang an den Eingang der genannten elektronischen Empfänger (5) angeschlossen und in der Lage ist, die genannten elektronischen Empfänger (5) auf eine gleichmässige und konstante Weise zu speisen.

4. Vorrichtung nach Patentanspruch 1, **dadurch gekennzeichnet**, dass der genannte Speisungsblock (8) weiter einen Stabilisierblock (83) enthält, der mit seinem Eingang an den Ausgang der genannten elektronischen Empfänger (5) angeschlossen ist, wobei der genannte Stabilisierblock (83) in der Lage ist, die Signale (9), die von den genannten elektronischen Empfängern (5) kommen, zu stabilisieren, und der mit seinem Ausgang an den Eingang des genannten Diskriminatorblockes (10) angeschlossen ist.

5. Vorrichtung nach Patentanspruch 1, **dadurch gekennzeichnet,** dass die genannten elektronischen Sender (2) und die genannten elektronischen Empfänger (5) auf solche Weise einen gegenseitigen Abstand voneinander haben, dass der zu vermessende Bereich der genannten Oberfläche (S) des genannten Gegenstandes (4), bestrahlt von einem jeden der genannten Sender (2) partiell den von dem angrenzenden Sender bestrahlten Bereich überlagert.

6. Vorrichtung nach Patentanspruch 1, **dadurch gekennzeichnet**, dass die genannten elektronischen Sender (2) und die entsprechenden elektronischen Empfänger (5) in wenigstens zwei Reihen quer zu der Zuführlinie angeordnet und zu sich selbst im Verhältnis zu einer Längsrichtung auf solche Weise versetzt sind, dass die genannte Abstrahlung, ausgesandt von den elektronischen, in einer der Querreihen angeordneten Sendern (2), Bereiche abdeckt, die nicht von der Abstrahlung (3) abgedeckt werden, die von den in einer angrenzenden Querreihe angeordneten elektronischen Sendern (2) ausgesandt ist.

7. Vorrichtung nach Patentanspruch 1, **dadurch gekennzeichnet**, dass die genannten elektronischen Sender (2) von elektrischen Strömungen gespeist sind, die von zehn- bis zwanzigmal niedrigere Werte im Verhältnis zum Nennstrom haben; **und dadurch**, dass die genannten elektronischen Empfänger (5) von Strömungen gespeist werden, deren Werte um zweihundertmal niedriger sind im Verhältnis zu den vorgesehenen Werten des Nennstromes.

## Revendications

1. Dispositif électronique pour la détection de nuances de couleur ou de différences de couleur sur les surfaces d'objets ou produits en mouvement le long d'une direction d'avancement, en particulier dans le secteur des lignes de production, comprenant:
- un bloc optoélectronique (1) constitué d'une pluralité d'émetteurs électroniques (2) émettant des radiations (3) sur la surface (S) à examiner des objets ou produits (4) en question, et les capteurs électroniques correspondants (5) de la-dite radiation après qu'elle ait été déviée et refléchie par les-dites surfaces (S), les-dits émetteurs électroniques (2) et capteurs (5) étant sensibilisés à la même fréquence et disposés sur au moins une ligne transversalement à la direction d'avancement (F) des-dits objets ou produits (4) de manière à couvrir, avec la radiation (3) émise par les-dits émetteurs électroniques (2), au moins dans sa totalité la dimension transversale des surfaces (S) à examiner des-dits objets ou produits (4); les-dits capteurs électroniques (2) étant constitués de phototransistors (7) à base (B) libre ou ouverte sur laquelle la-dite radiation réfléchie (6) est focalisée grâce à des moyens de concentration (15);
- un bloc d'alimentation électrique pour le-dit bloc optoélectronique (1); les-dits émetteurs électroniques (2) et les-dits capteurs électroniques (5) étant alimentés avec un courant de valeur très inférieure par rapport aux valeurs de courant nominal prévues de façon à améliorer la sensibilité de la-dite radiation réfléchie (6) dans le sens de rendre le courant de passage à travers le-dit phototransistor (7) plus modifiable en différentiel ou en pourcentage de la part de la variation du même courant de passage induit sur le-dit phototransistor (7) par la-dite radiation réfléchie (6);
- un bloc de discrimination (10) branché en entrée à la sortie du-dit bloc d'alimentation (8), que le bloc de discrimination (10) est en mesure de sélectionner, à partir des signaux électroniques reçus en provenance du-dit bloc d'alimentation (8) pendant chaque scansion transversale de la surface dans sa totalité (S) par les-dits émetteurs électroniques (2) et capteurs (5), au moins les signaux électriques correspondant aux valeurs chromatiques les plus foncées et respectivement les plus claires présentées par la-dite surface (S) du-dit objet (4) pendant chaque phase de scansion, et en mesure de mémoriser les signaux électriques correspondant aux-dites valeurs chromatiques dans un bloc de mémoire successif (11) sans les superposer aux signaux électriques déjà mémorisés dans le-dit bloc de mémoire (11);
- un bloc de comparaison (12), branché en entrée à la sortie du-dit bloc de mémoire (11) et en mesure de détecter en provenance de ce dernier les deux signaux électriques correspondant aux valeurs chromatiques les plus claires et les plus foncées respectivement, parmi toutes les valeurs mémorisées relatives à chaque phase de la scansion transversale, et en mesure également de comparer les deux-dits signaux électriques aux signaux électriques correspondant aux valeurs chromatiques préétablies comme modèle; en mesure d'envoyer en sortie pour chaque dit objet (4), un signal dépendant de la-dite comparaison et indiquant si les deux-dits signaux électriques détectés par le-dit bloc de mémoire (11) sont compris ou pas dans l'intervalle de valeurs défini par les signaux électriques correspondant au-dit modèle de valeurs chromatiques;
- un bloc actionneur (13) branché en entrée à la sortie du-dit bloc de comparaison (12) et en mesure de fournir un ou plus signaux électromécaniques correspondant au signal reçu du-dit bloc de comparaison (12);
- moyens de détection (17) détectant la présence du-dit objet (4), branché en sortie au-dit bloc d'alimentation (B) et au-dit bloc de comparaison (12) et en mesure d'actionner et d'interrompre le bloc d'alimentation (8) et le bloc de comparaison (12) en fonction des phases opératives de détection et comparaison.

2. Dispositif selon la revendication 1, caractérisé
- en ce que le-dit bloc d'alimentation et élaboration (8) comprend un bloc oscillateur-alimentateur (81) en mesure d'alimenter les-dits émetteurs électroniques (2) au moyen d'un courant périodique ondulatoire à impulsion positive dont la fréquence est plus élevée que la fréquence d'alimentation nominale provenant d'une source de courant électrique normale.

3. Dispositif selon la revendication 1, caractérisé
- en ce que le-dit bloc d'alimentation (8) comprend un autre bloc d'alimentation (82) branché en sortie à l'entrée des-dits capteurs électroniques (5) et en mesure d'alimenter les-dits capteurs électroniques (5) d'une manière uniforme et constante.

4. Dispositif selon la revendication 1, caractérisé
- en ce que le-dit bloc d'alimentation (8) comprend également un bloc de stabilisation (83) branché en sortie à l'entrée des-dits capteurs électroniques (5), le-dit bloc de stabilisation (83) étant en mesure de stabiliser des signaux (9) provenant des-dits capteurs électroniques (5) et étant branchés en sortie à l'entrée du-dit bloc de discrimination (10).

5. Dispositif selon la revendication 1, caractérisé
- en ce que les-dits émetteurs électroniques (2) et les-dits capteurs électroniques (5) sont réciproquement distancés de telle façon que la zone de la-dite surface (S) du-dit objet (4) devant être mesuré, irradiée par l'un des-dits émetteurs (2) est partiellement superposée à la zone irradiée par l'émetteur adjacent.

6. Dispositif selon la revendication 1, caractérisé
- en ce que les-dits émetteurs électroniques (2) et les capteurs électroniques respectifs (5) sont disposés sur au moins deux files disposées transversalement à la ligne d'alimentation et sont décalés entre eux par rapport à une direction longitudinale de telle façon que la radiation (3) émise par les émetteurs électroniques (2) disposés sur des files transversales intéresse des zones non couvertes par la radiation (3) émise par les émetteurs électroniques (2) disposés sur une ligne transversale contiguè.

7. Dispositif selon la revendication 1, caractérisé
- en ce que les-dits émetteurs électroniques (2) sont alimentés par des courants ayant des valeurs de dix à vingt fois inférieures par rapport à celles du courant nominal; et les-dits capteurs électroniques (5) sont alimentés avec des courants de valeur environ deux cents fois inférieure aux valeurs prévues du courant nominal.
